**Europäisches Patentamt**

**European Patent Office**

**Office européen des brevets**

(11) Publication number : **0 478 780 B1**

# EUROPEAN PATENT SPECIFICATION

(45) Date of publication of patent specification :
**18.01.95 Bulletin 95/03**

(51) Int. Cl.⁶ : $G01L\ 11/00$, $G01M\ 9/00$

(21) Application number : **91902280.6**

(22) Date of filing : **12.04.90**

(86) International application number :
**PCT/SU90/00087**

(87) International publication number :
**WO 91/16612 31.10.91 Gazette 91/25**

(54) METHOD AND DEVICE FOR DETERMINING FIELD OF PRESSURE OF CONTINUOUS FLUID MEDIUM ON THE SURFACE OF AN OBJECT.

(43) Date of publication of application :
**08.04.92 Bulletin 92/15**

(45) Publication of the grant of the patent :
**18.01.95 Bulletin 95/03**

(84) Designated Contracting States :
**DE GB**

(56) References cited :
**EP-A- 0 314 272**
**WO-A-90/01688**
**DE-C- 3 337 978**
**FR-A- 2 538 550**
**GB-A- 2 132 348**
**SU-A- 0 343 173**
**US-A- 3 835 703**
**US-A- 3 977 244**
**US-A- 4 774 835**

(73) Proprietor : **TSENTRALNY AEROGIDRODINAMICHESKY INSTITUT IMENI N.E. ZHUKOVSKOGO**
**Moskovskaya oblast**
**Zhukovsky 140160 (RU)**
Proprietor : **MOSKOVSKY GOSUDARSTVENNY UNIVERSITET IMENI M.V. LOMONOSOVA**
**Leninskie gory**
**Moskau 199899 (RU)**
Proprietor : **LENINGRADSKY GOSUDARSTVENNY UNIVERSITET**
**Universitetskaya naberezhnaya, 7**
**St. Peterburg, 199034 (RU)**

(72) Inventor : **LENINGRADSKY GOSUDARSTVENNY UNIVERSITET**
**Universitetskaya nab., 7**
**Leningrad, 199034 (RU)**
Inventor : **MOSHAROV, Vladimir Evgenievich**
**ul. Dugina, 17-31**
**Moskovskaya obl.**
**Zhukovsky, 140160 (RU)**
Inventor : **ORLOV, Anatoly Antonovich**
**nab. Tsiolkovskogo, 22-82**
**Moskovskaya obl. Zhukovsky, 140160 (RU)**
Inventor : **FONOV, Sergei Dmitrievich**
**ul. Nizhegorodskaya, 6-19**
**Moskovskaya obl. Zhukovsky, 140160 (RU)**
Inventor : **KUZMIN, Mikhail Georgievich**
**Leningradsky pr., 69-88**
**Moscow, 125057 (RU)**
Inventor : **RADCHENKO, Vladimir Nikolaevich**
**ul. Michurina, 4-31**
**Mokovskaya obl. Zhukovsky, 140160 (RU)**
Inventor : **SADOVSKY, Nikita Alexandrovich**
**Leninsky pr., 91-4-644**
**Moscow, 117373 (RU)**
Inventor : **BASOV, Lev Leonidovich ul. Botanicheskaya, 3-4-6**
**Petrodvorets**
**Leningrad, 198904 (RU)**
Inventor : **LYALIN, Gennady Natanovich**
**Ligovsky pr., 185-32**
**Leningrad, 192007 (RU)**
Inventor : **TROYANOVSKY, Igor Vladimirovich**
**Kutuzovsky pr., 33-3**
**Moscow, 121165 (RU)**

(74) Representative : **Sparing Röhl Henseler**
**Patentanwälte**
**Postfach 14 04 43**
**D-40074 Düsseldorf (DE)**

## Description

Field of the Invention

The present invention relates to measurements and in particular to methods of determining the pressure pattern of a continuous fluid medium on the surface of objects and to devices therefor and can be used in various fields of science and technology.

The most important problem in aerodynamics is concerned with determination of distributed forces acting on a flying vehicle. The basic component of these forces results from a distributed air pressure on the surface of a flying vehicle. The problem of defining the distributed forces involves determination of the pressure pattern on the surface of a flying vehicle. Thus, requisite means should be provided to measure air pressure at each point on the surface of a flying vehicle in experimental research. Similar problems are solved in experimental hydrodynamics.

Known in the art are different methods of measuring the pressure of a continuous fluid medium at preset points on the surface of an object by placing at said points semiconductor, magnetic, piezoelectric or other pressure transducers.

For example, there is known a method of determining air pressure at preset points on the surface of an object in an aerodynamic experiment (cf. Philpott, D.R., "Pressure measurement in a blow-down wind tunnel". Measurement, Vol. 3, No. 2, April-June 1985). With such a method, drain holes are made on the surface of the analyzed object. The drain holes are connected along pneumatic paths with individual pressure converters, more specifically, with semiconductor pressure transducers. Signals derived from the pressure transducers are applied to a data collection and processing system comprising an electrical signal switch, an analog-to-digital converter and a master computer. In the cours of the aerodynamic experiment the switch and the analog-to-digital converter controlled by the master computer sequentially poll the pressure converters, thereby measuring the air pressure at preset points on the surface of the analyzed object. The foregoing method permits measuring the air pressure at preset points on the surface of the analyzed object to a fairly high accuracy.

However, the afore-mentioned method is suitable for air pressure measurements only with a finite number of preset points on the surface of the analyzed object. The number of drain holes is limited by the cross-sectional area of its elements through which pneumatic paths are to be made. Stated differently, air pressure measurements cannot be taken at a random point on the surface of the analyzed object. Also, such a method does not allow air pressure measurements on thin elements of the analyzed object wherein pneumatic paths cannot be made. Furthermore, air flow along pneumatic paths substantially limits the speed of the disclosed method and prevents measurement of a rapidly changing pressure. A major disadvantage of the afore-mentioned method is intricate technology used in creating the necessary models, which appreciably limits the scope of experiments aimed at studying the distribution of pressure on the surface of objects.

There is also known a method of measuring pressure of a continuous fluid medium at preset points on the surface of an object by the use of pellicular capacitive pressure transducers (cf. Portat M., Chatanier M., "Les capteurs pelliculaires de pression et leur applications", Recherche aerospaciale, No. 3, 1982). With such a method, pellicular capacitive pressure transducers are pasted at preset points on the surface of an object under test. A data collection and processing system is used to poll the pressure transducers in much the same manner as in the known method described previously. The use of pellicular capacitive pressure transducers in the last-described method eliminates the need for intricate models having drain holes.

However, such pellicular capacitive pressure transducers are characterized by poor discreteness. Moreover, location of signal wires on the surface of the analyzed object limits the number of pasted pressure transducers. The foregoing disadvantages of pellicular capacitive pressure transducers substantially limit the field of uses of the last-described method.

Inasmuch as the prior art methods and devices for measuring pressure of a continuous fluid medium on the surface of objects are characterized by that their pressure transducers are arranged discretely, it is impossible to determine experimentally the pressure of the fluid medium at points where there are no pressure transducers on the surface of the analyzed object.

So, the above known methods and devices for measuring pressure of a continuous fluid medium on the surface of objects do not permit determining the pressure pattern of a continuous fluid medium on the surface of the analyzed object.

An alternative method is known from US-A-3 835 703. The surface of a model to be tested is covered with a point containing a special dye. On exposure to an airstream containing droplets of an activating material, a colour change occurs at those points on the surface of the model where the activating droplets impinge.

## Disclosure of the Invention

The invention resides in creating a method of determining the pressure pattern of a continuous fluid medium on the surface of an object and a device therefor.

The foregoing object is accomplished by that a method of determining the pressure pattern of a fluid medium on the surface of an object according to the invention comprises the steps of applying to the surface of an object a sensitive layer containing phosphor whose luminescence may be quenched by an active substance; placing in a continuous fluid medium the object having on its surface said sensitive layer; exciting luminescence of the phosphor of the sensitive layer by exposing it to light at a predetermined wavelength; introducing in the continuous fluid medium an appropriate active substance, thereby quenching luminescence of the phosphor of the sensitive layer; recording a change in the pattern of luminescent paramters of the phosphor of the sensitive layer due to the quenching of luminescence with the active substance, which is used to determine the pressure pattern of the continuous fluid medium on the surface of the analyzed object.

To find the pressure pattern, it is necessary to choose those luminescent parameters which are to a maximum extent dependent on the pressure of a continuous fluid medium. It is of advantage that the luminescent parameter of the phosphor of the sensitive layer should be the ratio of the luminescence intensity of the phosphor of the sensitive layer at an unknown pressure of a continuous fluid medium to the luminescence intensity of the phosphor of the sensitive layer at a known pressure of a continuous fluid medium. A maximum pressure measuring accuracy can be obtained when the luminescence quenching time is chosen as the luminescent parameter of the phosphor of the sensitive layer, a change in its pressure pattern being used to determine the pressure pattern of a given continuous fluid medium.

It is also advantageous that in most cases the active substance used to quench luminescence should be paramagnetic gases, for example, oxygen. More particularly, the air may be an example of a continuous fluid medium containing in a constant proportion such an active substance as oxygen.

It is further advantageous that the phosphor whose luminescence is quenched by many active substances, say oxygen should represent aromatic hydrocarbons and their derivatives or heterocyclic compounds and their derivatives or complex structures of metals of the platinum group with organic ligands.

To affix the phosphor to the surface of an object, its sensitive layer is doped with a suitable binder, preferably polymers, more specifically, organosilicon polymers or an adsorbing material forming a coat. Thus, a continuous sensitive layer covers the surface of the analyzed object.

When polymers are used as a binder, it is of advantage that the analyzed object should be initially coated with the same polymer containing a filler in order to make more uniform light diffusion on the surface of the analyzed object.

The device for determining the pressure pattern of a continuous fluid medium on the surface of an object according to the invention comprises:

an illumination source exciting luminescence of phosphor of a sensitive layer;

a means adapted for recording the luminescent field of a sensitive layer; and

a luminescent parameter processing unit designed to determine the pressure pattern from the luminescent field of a sensitive layer.

## Summary of the Drawings

The invention will now be described further with reference to specific embodiments thereof, taken in conjunction with the accompanying drawings wherein:

Fig. 1 shows diagrammatically a device for determining the pressure pattern of a continuous fluid medium on the surface of an object according to the invention;

Fig. 2 shows, by way of example, the ratio of the luminescence intensity of phosphor of a sensitive layer at a known pressure of a continuous fluid medium to the luminescence intensity of phosphor of a sensitive layer at an unknown pressure of a continuous fluid medium versus the pressure of a continuous fluid medium according to the invention;

Fig. 3 shows, by way of example, dependence of the luminescence quenching time of the phosphor of the sensitive layer on the pressure of the continuous fluid medium according to the invention; and

Fig. 4 shows, by way of example, distribution of air pressure within a given section according to the invention.

## Preferred Embodiment of the Invention

The proposed method of determining the pressure pattern of a continuous fluid medium on the surface of an object is based on a physical phenomenon involving the quenching of luminescence of certain phosphors by active substances. The quenching process leads to changes in the luminescent parameters more specifically, in intensity I and quenching time $\tau$. The luminescence intensity I and quenching time $\tau$ are inversely proportional to partial pressure $P_a$ of the active substance used:

$$I = I_o/(1 + k \times P_a),$$
$$\tau = \tau_o/(1 + k \times P_a)$$

where

$I_o$ and $\tau_o$      are, respectively, the luminescence intensity and quenching time when no active substance is used;

k      is the quenching factor.

When the concentration of an active substance in a continuous fluid medium is constant, the partial pressure P of the active substance is directly proportional to the impact pressure of the given continuous fluid medium. Thus, the luminescent parameters are indicative of the pressure of the continuous fluid medium on the surface of the analyzed object.

The proposed method of determining the pressure pattern of a continuous fluid medium on the surface of an an object will now be described further with reference to a preferred embodiment of a device therefor.

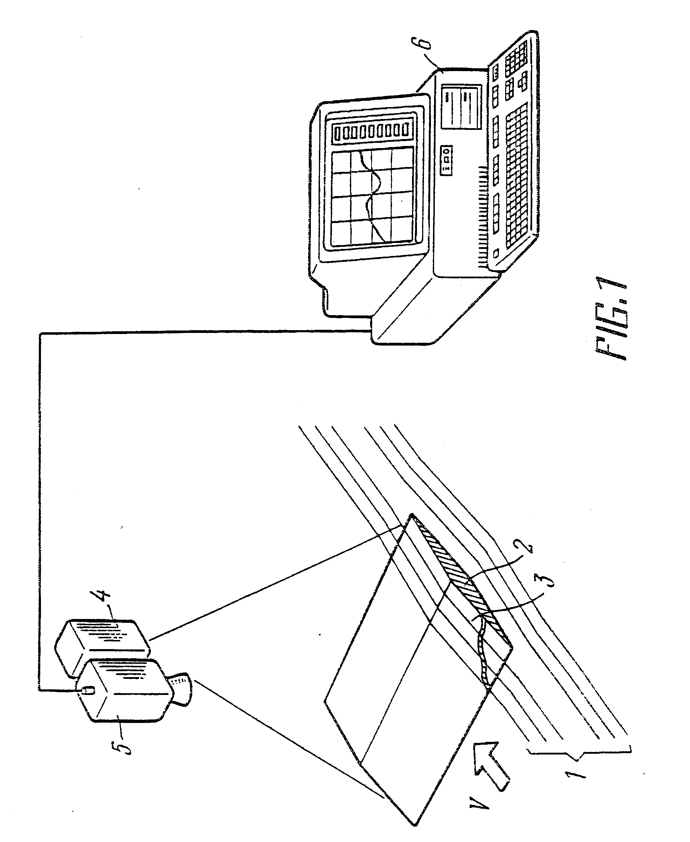

To determine the pressure pattern of a continuous fluid medium 1 (Fig. 1), a sensitive layer 3 is applied to the surface of an object 2. The basic component of the sensitive layer 3 is phosphor whose luminescence may be quenched by an active substance. The object 2 having on its surface the sensitive layer 3 is placed in the continuous fluid medium 1 which is in turn doped with an active substance whose concentration is constant. The luminescence of the sensitive layer 3 is excited by means of an illumination source 4. The exciting light spectrum should overlap the phosphor absorption spectrum of the sensitive layer 3. The illumination source 4 may represent, for example, a laser operating at a predetermined wavelength or incandescent, arc, gaseous-discharge, flash and other lamps with appropriate light filters.

A means 5 is used to record the luminescence field of the sensitivity layer 3 on the surface of the object 2. There should be an overlap between the spectral sensitivity region of the recorder 5 and the luminescence spectrum of the phosphor of the sensitive layer 3. To increase accuracy in recording the luminescence field, it is advantageous that the spectral sensitivity region of the recorder 5 and the exciting light spectrum should not overlap each other. This can be done, for example, by using appropriate light filters. The recorder may be, for example, a TV camera, a TV camera with a video tape recorder, a cine camera, a photographic camera, a dissector, a mechanical scanner with a photoelectric recording means, etc.

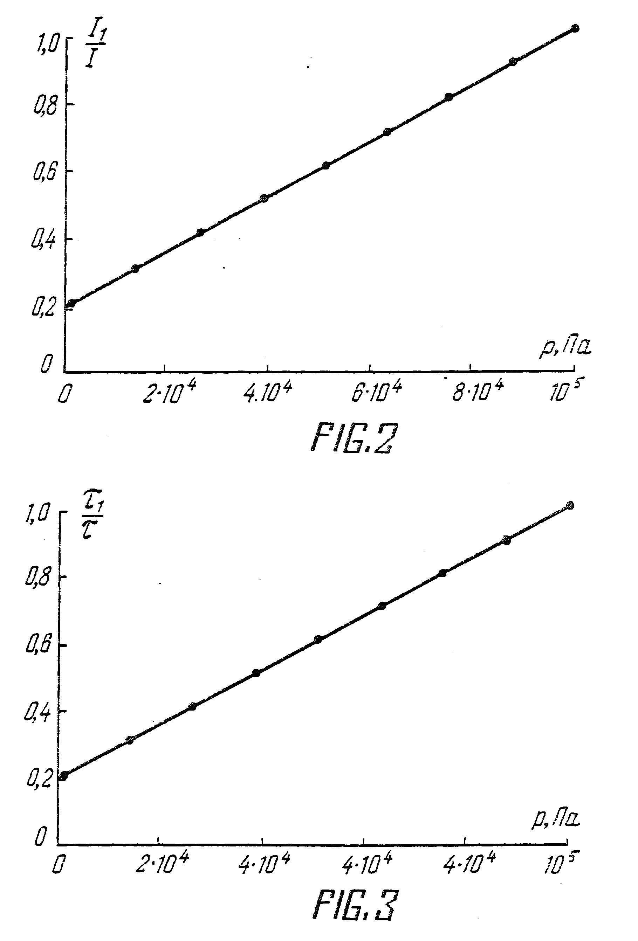

A luminescent parameter processing unit 6 is used to determine at each point on the surface of the analyzed object changes in the chosen luminescent parameter, for example, in the luminescence intensity I or quenching time. To determine changes in any of the aforesaid luminescent parameters, it is necessary to record at the initial stage the luminescence field of the phosphor of the sensitive layer 3 at a known pressure of the continuous fluid medium 1 containing an active substance whose concentration is constant and subsequently the luminescence field with an unknown pressure pattern of the continuous fluid medium. Next using the predetermined dependence of a change in the chosen luminescent parameter (for the ratio of the luminescence intensity $I_1$ at a known pressure of the continuous fluid medium to the luminescence intensity I at an unknown pressure of the continuous fluid medium as in Fig. 2 and for the ratio of the luminescence quenching time $\tau_1$ at a known pressure of the continuous fluid medium to the luminescence quenching time $\tau$ at an unkown pressure of the continuous fluid medium 1 as in Fig. 3) on the pressure of the continuous fluid medium 1 containing a suitable active substance it is necessary to measure the pressure of said medium at each point on the surface of the object 2, thereby determining the pressure pattern of the continuous fluid medium on the surface of the analyzed object.

A number of chemical compounds are capable of quenching luminescence. For example, oxygen and nitrous oxide are active substances quenching the luminescence of phosphor of a sensitive layer.

An example of a continuous fluid medium containing an active substance is the air in which there is oxygen whose concentration is constant.

Used as the phosphor of the sensitive layer may be aromatic hydrocarbons or heir derivatives, for example, anthracene, 9, 10-diphenylanthracene, 9, 10-dichloroanthracene, acenaphthene, bromacenaphthene, perylene, naphthalene, pyrene, coronene and the like. Also, the phosphor of the sensitive layer may represent heterocyclic compounds or their derivatives, for example, phenanthranyl, azaphenanthrene, pyridine, acridine, erythrosine, sozin, etc. Besides, used as the phosphor of the sensitive layer may be complex compounds of metals of the platinum group with organic ligands, for example, platinum, ruthenium, palladium and other compounds with such organic ligands as bipyridyl, phenanthroline, acetylacetone, porphyrins and the like.

To affix the phosphor to the surface of the object 2, its sensitive layer 3 should preferably include a binder. Used as a binder may be different polymers, for example, polystyrene, polymethyl methacrylate, polyvinyl butyral, polyvinyl chloride, artificial and natural rubber, etc. The sensitivity of said layer is particularly high when its binder represents organosilicon polymers such as polyvinyltrimethylsilane, polyethylaltrimethylsilane, polydimethylsiloxane, polydiphenylsiloxane, polymethylphenylsiloxane, etc.

Given below are several examples illustrating preferred composition of the sensitive layer.

Example 1

Composition of the sensitive layer without any additional binder, in which the phosphor is a derivative of aromatic hydrocarbon, more particularly, polyvinyl naphthalene:

|  | % by mass |
|---|---|
| polyvinyl naphthalene | 100 |

Example 2

Composition of the sensitive layer containing aromatic hydrocarbon as phosphor and organosilicon polymer as binder:

| polymer as binder: | % by mass |
|---|---|
| polyvinyltrimethylsilane | 99 |
| 9,10- diphenylanthracene | 1 |

Example 3

Composition of the sensitive layer containing a derivative of aromatic hydrocarbon as phosphor and a polymethylmethacrylate polymer as binder:

|  | % by mass |
|---|---|
| polymethylmethacrylate | 99 |
| bromacenaphthene | 1 |

Example 4

Composition of the sensitive layer containing a derivative of heterocyclic compound (erythrosine) as phosphor and polyvinyl butyral as binder:

|  | % by mass |
|---|---|
| polyvinyl butyral | 99.8 |
| erythrosine | 0.2 |

Example 5

Composition of the sensitive layer containing a metal compound of the platinum group with organic ligand as phosphor and an organosilicon polymer as binder:

|                                          | % by mass |
| ---------------------------------------- | --------- |
| polydimethylsiloxane                     | 99.9      |
| ruthenium tris-4.7-diphenyl-1, 10-phenanthroline | 0.1 |

Since the reflection characteristics of the surface of an object are, as a rule, nonuniform, it is of advantage that said surface should be initially given a coat of the polymer intended for the sensitive layer and containing a suitable filler in order to make more uniform the reflection characteristics of the surface of the analyzed object. Used as the filler may be, for example, finely divided powders of different metals, powdered ZnO, $TiO_2$, $Al_2O_3$, $FeO_2O_3$, $CaCO_3$, carbon black, etc.

Example 6

Composition of the layer according to Claim 12 for preliminary coating of the surface of the analyzed object:

|                                   | % by mass |
| --------------------------------- | --------- |
| polymethylmethacrylate            | 70        |
| finely divided aluminium powder   | 30        |

The binder of the sensitive layer may also be an adsorbing material. The adsorbing material may be, for example, porous glass, silica gel-base chromatographic plates and the like.

Example 7

Composition of the sensitive layer made up of an adsorbing material such as porous glass with phosphor: ruthenium tris-4.7-diphenyl-1, 10-phenanthroline in the amount of $5 \cdot 10^{-4}$ $g/cm^2$ of the surface of the analyzed object.

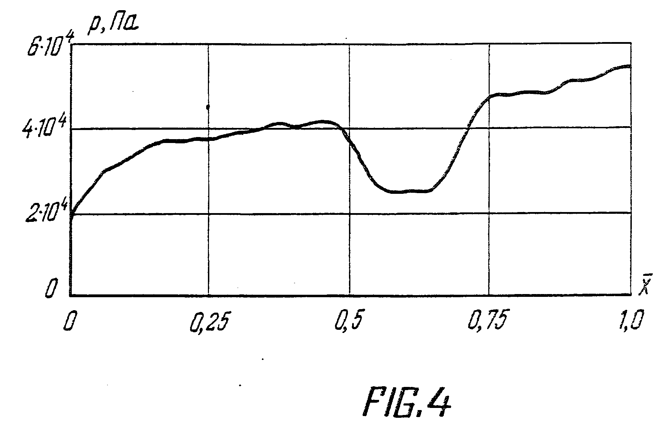

Fig. 4 illustrates distribution of air pressure on the upper surface of a diamond-shaped section in accordance with the proposed method. To obtain such distribution, the surface of a diamond-shaped section (2) was topped with a sensitive layer (3) containing polymethylmethacrylate and bromacenaphthene (99 and 1% by mass, respectively).

At a prelinary stage, the surface of the section was given a coat containing 70% by mass of polymethylmethacrylate and 30% by mass of finely divided aluminium powder. The section (2) having on its surface the sensitive layer (3) was exposed to air flow (1) in a wind tunnel. The luminescence of the phosphor of the sensitive layer (3) was excited by the use of an arc xenon lamp (4) provided with a light filter transmitting light in the region of 290 to 340 nm. A change in the pattern of luminescent parameters was recorded with the help of a TV camera (5) fitted with a light filter transmitting light in the region of 380 nm. The chosen luminescent parameter of the phosphor of the sensitiv layer (3) was the ratio of the luminescence intensity of the phosphor of the sensitive layer at an unknown pressure of the air flow to the luminescence intensity of the phosphor of the sensitive layer at a known pressure of the air flow. Recorded were the luminescence field of the sensitive layer at atmospheric pressure in the absence of air flow and the luminescence field of the sensitive layer in the presence of air flow at an unknown pressure. The processing of the luminescence fields by the use of an image processing system (6), for example, Pericolor 2001E (the French Numelec) yielded the air pressure distribution on the surface of the diamond-shaped section (Fig. 4).

Industrial Applicability

The proposed method of determining the pressure pattern of a continuous fluid medium on the surface of an object and the device therefor make it possible for the first time to measure pressure of a continuous fluid medium at each point on the surface of an object, an advantage enabling determination of distributed loads acting on the analyzed object to a substantially higher accuracy as compared with the prior art. Another advantage of the method according to the invention is that it does not need intricate models with drain holes, which appreciably increases the field of uses of the herein-proposed method of determining the pressure pattern of a continuous fluid medium on the surface of an object. In the method according to the invention the use of a thin sensitive layer as a pressure transducer of a continuous fluid medium permits determining the pressure pattern of a continuous fluid medium on thin elements of the analyzed object and also on moving objects, say on controls of flying vehicles, dynamically similar models, propellers and the like. Moreover, a thin sensitive layer has a high response, a feature enabling measurements of a rapidly changing pressure of a continuous fluid medium.

## Claims

1. A method of determining the pressure pattern of a continuous fluid medium on the surface of an object, **characterized** in that it comprises the steps of:

   applying on the surface of an object (2) a sensitive layer (3) containing phosphor whose luminescence is quenched by an active substance;

   exposing the object (2) having on its surface the sensitive layer (3) to a continuous fluid medium (1);

   exciting luminescence of the phosphor of the sensitive layer by illuminating it with light at a predetermined wavelength;

   doping the continuous fluid medium (1) with a suitable active substance, thereby causing partial quenching of luminescence of the phosphor of the sensitive layer;

   recording a change in the field of luminescent parameters of the sensitive layer (3) due to the quenching of luminescence by an active substance in order to determine the pressure pattern of the continuous fluid medium on the surface of the analyzed object.

2. A method as claimed in Claim 1, **characterized** in that one of the luminescent parameters of the phosphor of the sensitive layer (3) is the ratio of the luminescence intensity of the phosphor of the sensitive layer at an unknown pressure of the continuous fluid medium to the luminescence intensity of the phosphor of the sensitive layer at a known pressure. of the continuous fluid medium.

3. A method as claimed in Claim 1, **characterized** in that one of the luminescent parameters of the phosphor of the sensitive layer (3) is the luminescence quenching time whose variation is indicative of the pressure pattern of the continuous fluid medium on the surface of the analyzed object.

4. A method as claimed in Claim 1, **characterized** in that the active substance is oxygen.

5. A method as claimed in Claim 1, **characterized** in that the phosphor represents aromatic hydrocarbons or their derivatives.

6. A method as claimed in Claim 1, **characterized** in that heterocyclic compounds or their derivatives are used as said phosphor.

7. A method as claimed in Claim 1, **characterized** in that metal compounds of the platinum group with organic ligands are used as said phosphor.

8. A method as claimed in Claim 1, **characterized** in that the sensitive layer contains a binder.

9. A method as as claimed in Claim 8, **characterized** in that layers of an adsorbing material are used as the binder.

10. A method as claimed in Claim 8, **characterized** in that polymers are used as said binder.

11. A method as claimed in Claim 10, **characterized** in that a desired polymer is chosen from organosilicon polymers.

12. A method as claimed in Claim 10, **characterized** in that the surface of the object is initially covered with a layer of the same polymer containing a filler.

13. A device for accomplishing the method as claimed in Claims 1 to 12, **characterized** in that it comprises:

   an illumination source (4) exciting luminescence of the sensitive layer (3) applied to the surface of the object (2);

   a means (5) for recording the luminescence field of the sensitive layer; and

a luminescent parameter processing unit (6).

**Patentansprüche**

1. Verfahren zur Bestimmung des Druckfeldes eines kontinuierlichen Fluidums auf der Oberfläche eines Objektes, **dadurch gekennzeichnet**, daß man

   auf die Oberfläche des Objektes (2) eine empfindliche Schicht (3) aufbringt, die einen Leuchtstoff enthält, dessen Lumineszenz durch einen aktiven Stoff löschbar ist;

   das Objekt (2) mit der auf seine Oberfläche aufgebrachten empfindlichen Schicht (3) einem kontinuierlichen Fluidum (1) aussetzt;

   die Lumineszenz des Leuchtstoffes der empfindlichen Schicht erregt, indem dieser mit dem Licht einer entsprechenden vorbestimmten Wellenlänge beleuchtet wird;

   in das kontinulierliche Fluidum (1) einen entsprechenden aktiven Stoff einführt und auf diese Weise eine teilweise Löschung der Lumineszenz des Leuchtstoffes der empfindlichen Schicht hervorruft;

   eine Änderung des Feldes der Parameter der Lumineszenz des Leuchtstoffes der empfindlichen Schicht (3) registriert, welche durch die Löschung der Lumineszenz mittels des aktiven Stoffes bedingt ist, um das Druckfeld des kontinuierlichen Fluidums (1) auf der Oberfläche des untersuchten Objektes zu bestimmen.

2. Verfahren nach Anspruch 1, dadurch gekennzeichnet, daß einer der Parameter der Lumineszenz des Leuchtstoffes der empfindlichen Schicht (3) das Verhältnis der Intensität der Lumineszenz des Leuchtstoffes der empfindlichen Schicht bei unbekanntem Druck des kontinuierlichen Fluidums zur Intensität der Lumineszenz des Leuchtstoffes der empfindlichen Schicht bei bekanntem Druck des kontinuierlichen Fluidums ist.

3. Verfahren nach Anspruch 1, dadurch gekennzeichnet, daß einer der Parameter der Lumineszenz des Leuchtstoffes der empfindlichen Schicht (3) die Zeit des Abklingens der Lumineszenz, deren Änderung für das Druckfeld des kontinuierlichen Fluidums auf die Oberfläche des analysierten Objektes indikativ ist, ist.

4. Verfahren nach Anspruch 1, dadurch gekennzeichnet, daß der aktive Stoff Sauerstoff ist.

5. Verfahren nach Anspruch 1, dadurch gekennzeichnet, daß der Leuchtstoff aromatische Kohlenwasserstoffe oder deren Derivate darstellt.

6. Verfahren nach Anspruch 1, dadurch gekennzeichnet, daß als Leuchtstoff heterozyklische Verbindungen oder deren Derivate verwendet werden.

7. Verfahren nach Anspruch 1, dadurch gekennzeichnet, daß als Leuchtstoff Metallverbindungen der Platingruppe mit organischen Liganden verwendet werden.

8. Verfahren nach Anspruch 1, dadurch gekennzeichnet, daß die empfindliche Schicht ein Bindemittel enthält.

9. Verfahren nach Anspruch 8, dadurch gekennzeichnet, daß als Bindemittel Schichten eines adsorbierenden Materials verwendet werden.

10. Verfahren nach Anspruch 8, dadurch gekennzeichnet, daß als Bindemittel Polymere verwendet werden.

11. Verfahren nach Anspruch 10, dadurch gekennzeichnet, daß ein gewünschtes Polymer aus der Klasse von Organosilikonpolymeren ausgewählt wird.

12. Verfahren nach Anspruch 10, dadurch gekennzeichnet, daß die Oberfläche des Objektes anfänglich mit einer Schicht desselben, einen Füllstoff enthaltenden Polymers überzogen wird.

13. Einrichtung zur Durchführung des Verfahrens nach den Ansprüchen 1 bis 12, dadurch gekennzeichnet, daß sie enthält:

   eine Beleuchtungsquelle (4), die die Lumineszenz der auf die Oberfläche des Objektes (2) aufgebrachten empfindlichen Schicht (3) erregt,

ein Mittel (5) zum Registrieren des Lumineszenzfeldes der empfindlichen Schicht, und
eine Verarbeitungseinheit (6) für die Parameter der Lumineszenz.

**Revendications**

1.  Procédé de détermination d'une plage de pression d'un fluide en écoulement continu, **caractérisé**
    en ce qu'on met l'objet (2) sur la surface duquel est appliquée la couche sensible (3) dans un fluide
    en écoulement continu (1);

    en ce qu'on excite la luminescence du composé luminescent en l'éclairant par la lumière l'onde de
    laquelle a une longueur prédéterminée;

    en ce qu'on introduit, dans le fluide en écoulement continu (1), une matière active convenable en
    provoquant ainsi une extinction partielle de la luminescence du composé luminescent de la couche sensible;

    en ce qu'on enregistre la variation de la plage des paramètres de la luminescence du composé
    luminescent de la couche sensible (3) provoquée par l'extinction de la luminescence par la matière active
    pour estimer la plage de la pression du fluide en écoulement continu exercée sur la surface d'un objet
    analysé.

2.  Procédé selon la revendication 1, caractérisé en ce qu'un des paramètres de la luminescence du composé
    luminescent de la couche sensible (3) est le rapport entre l'intensité de la luminescence du composé luminescent de la couche sensible à une pression inconnue du fluide en écoulement continu et l'intensité
    de la luminescence du composé luminescent de la couche sensible à une pression connue du fluide en
    écoulement continu.

3.  Procédé selon la revendication 1, caractérisé en ce que le temps d'extinction de la luminescence est un
    des paramètres de la luminescence du composé luminescent de la couche sensible (3), la variation duquel
    est indicative de la plage de la pression du fluide en écoulement continu exercée sur la surface d'un objet
    analysé.

4.  Procédé selon la revendication 1, caractérisé en ce que la matière active est oxygène.

5.  Procédé selon la revendication 1, caractérisé en ce que le composé luminescent est représenté par des
    hydrocarbures aromatiques ou leurs dérivés.

6.  Procédé selon la revendication 1, caractérisé en ce qu'on utilise des composés hétérocycliques ou leurs
    dérivés en qualité du composé luminescent.

7.  Procédé selon la revendication 1, caractérisé en ce qu'on utilise des composés des métaux du groupe
    de la platine avec des liants organiques en tant que composé luminescent.

8.  Procédé selon la revendication 1, caractérisé en ce que la couche sensible contient un matériau liant.

9.  Procédé selon la revendication 8, caractérisé en ce qu'on utilise des couches de matériau adsorbant en
    qualité d'une matière liante.

10. Procédé selon la revendication 8, caractérisé en ce qu'on utilise des polymères en tant que matériau liant.

11. Procédé selon la revendication 10, caractérisé en ce qu'on choisit un polymère désiré parmi la classe des
    polymères organo-siliciés.

12. Procédé selon la revendication 10, caractérisé en ce qu'on recouvre préalablement la surface d'un objet
    d'une couche de ce même polymère avec une charge.

13. Dispositif pour la mise en oeuvre le procédé selon les revendications 1 à 12, caractérisé en ce qu'il
    comporte:

    une source d'éclairage (4) qui excite la luminescence de la couche sensible (3) appliquée sur la
    surface d'un objet (2),

    un moyen d'enregistrage (5) du champ de luminescence de la couche sensible, et

    une unité de traitement (6) des paramètres de la luminescence.

9

FIG.1

FIG.2

FIG.3

FIG.4